Europäisches Patentamt

European Patent Office

Office européen des brevets

(11) Publication number: **0 218 788 B1**

# EUROPEAN PATENT SPECIFICATION

(45) Date of publication of patent specification: **04.03.92**   (51) Int. Cl.⁵: **F16K  1/226**

(21) Application number: **86107763.4**

(22) Date of filing: **06.06.86**

(54) **Seal for high performance butterfly valve.**

(30) Priority: **24.06.85 US 747979**

(43) Date of publication of application:
**22.04.87 Bulletin  87/17**

(45) Publication of the grant of the patent:
**04.03.92 Bulletin  92/10**

(84) Designated Contracting States:
**GB IT NL SE**

(56) References cited:
**AT-B- 381 151
DE-A- 3 045 215
GB-A- 2 090 380
US-A- 3 677 297
US-A- 4 005 848**

(73) Proprietor: **White Consolidated Industries, Inc.**
**11770 Berea Road
Cleveland Ohio 44111(US)**

(72) Inventor: **Hayes, William R.**
**8695 Birchbark Drive
Cincinnati Ohio 45242(US)**

(74) Representative: **Türk, Gille, Hrabal
Brucknerstrasse 20
W-4000 Düsseldorf 13(DE)**

**Description**

The present invention is directed to a butterfly valve, and, more particularly, to a seal arrangement for a butterfly control valve.

Typically, a butterfly valve comprises a vane in the form of a disc with a part spherical periphery. The disc is rotatably mounted within the fluid path of a valve housing, whereby the vane periphery may be rotated to engage the internal surfaces of the housing to shut the valve. When in the closed position, it is desirable to provide a seal element between the vane periphery and valve housing surface to insure a leak tight valve shut off.

Accordingly, the prior art contains numerous proposals for a seal element construction suitable for sealing the vane of a butterfly valve. Typically, the seal element is in the form of a ring seal that extends circumferentially about the valve housing at the position where the vane periphery is rotated at the valve shut off. The seal engages the vane periphery and applies a radial squeeze thereon to seal the valve.

The prior art includes seals having glass filled membranes to provide dimensional stability to the seal element during operation of the valve. In addition, many previous proposals for a butterfly valve seal utilize additional spring elements arranged to impart a radial squeeze by the seal on the vane periphery.

US-A-4 005 848 discloses a bidirectional valve construction having a spring-assisted seal construction, wherein the seal element is biassed by a spring element. As this known seal construction is bidirectional, its elements function differently depending on the direction of the fluid flow. Further, when the pressure is from the direction of Fig. 5 in this document the element does not function to reduce in diameter the effective anchor point of the seal element.

DE-A-3 045 215 discloses a seal arrangement which is also bidirectionally designed. This seal arrangement includes an axially projecting portion. While it is apparently possible for the projecting portion to engage the surface of the seal insert, this is described as an unusual circumstance and is intended to restrain the seal from destructive interference with the disc rather than for purposes of providing a change in seal geometry as a function of increased pressure. Further, the valve structure of this document is designed for bidirectional fluid flow. The seal according to this document is intended to be mechanically reinforced, for example by using glass fibres and the like, for high pressure applications.

The object of the present invention is to provide a seal arrangement of the type as defined in the introductory portion of claim 1 in which the seal element achieves leak-tight valve shutoff over a long worklife without the need of glass filled internal membranes for dimensional stability or additional spring elements to impart a radial squeeze.

Accordingly, a seal arrangement for a butterfly valve is proposed by the present invention which comprises the features as specified in claim 1. Further features of the present invention are subject of the subclaims.

In accordance with claim 1, a high performance seal arrangement for a butterfly control valve is provided having a specifically constructed seal element which cooperates with the corresponding confinement chamber in the valve housing in such a manner that the diameter of the effective anchor point or support point is varied in dependency of the fluid pressure of the fluid flow.

The seal element of the present invention brings forward such an effect so that the worklife is extended remarkably. Particularly, the construction of the present invention is so that the fluid pressure will inherently and automatically orient the seal relative to the seal containment chamber to provide a seal geometry containment chamber support, stress distribution and seal deflection, which are optimum for the pressure range concerned. In this manner, the pressure effects upon the seal element are maintained at a practical minimum for each pressure range to considerably reduce wear and tear on the seal element and thereby substantially extend the lifetime of the seal arrangement according to the present invention.

Pursuant to the invention, fluid pressure will be retained by the seal element through three clearly defined discrete pressure range operating stages of the seal element. During each of the discrete pressure range operating modes of the seal element, the fluid pressure will inherently and automatically orient the seal relative to the seal containment chamber to provide a seal geometry, containment chamber support, stress distribution and seal deflection which is optimum for the pressure range of the particular operating mode. In this manner, the pressure effects upon the seal element are maintained at a practical minimum for each of the three discrete pressure ranges to considerably reduce wear and tear on the seal element and thereby greatly extend the worklife of the seal of the invention. Significantly, the present invention teaches a seal element that achieves leak tight valve shut off over a long worklife without the need of glass filled internal membranes for dimensional stability or additional spring elements to impart a radial squeeze.

For a better understanding of the above, and other features and advantages of the invention, reference should be made to the following detailed description of a preferred embodiment of the invention and to the accompanying drawings, wherein

Fig. 1 is a front plan view of a butterfly control valve built in accordance with the invention.

Fig. 2 is a side cross-sectional view of the valve of Fig. 1 taken generally along line 2-2 and illustrating the vane in the closed position.

Fig. 3 is an additional side cross-sectional view of the valve as shown in Fig. 2 and illustrating the vane after rotation through a first predetermined number of degrees.

Fig. 4 is a bottom view, partially in cross-section, of the valve of Fig. 1, taken generally along line 4-4.

Fig. 5 is an exploded detail view of the vane seal element illustrated in Fig. 2.

Fig. 6 is a further side cross-sectional view of the valve as shown in Fig. 2 and illustrating the vane after rotation through 90° (full open valve position).

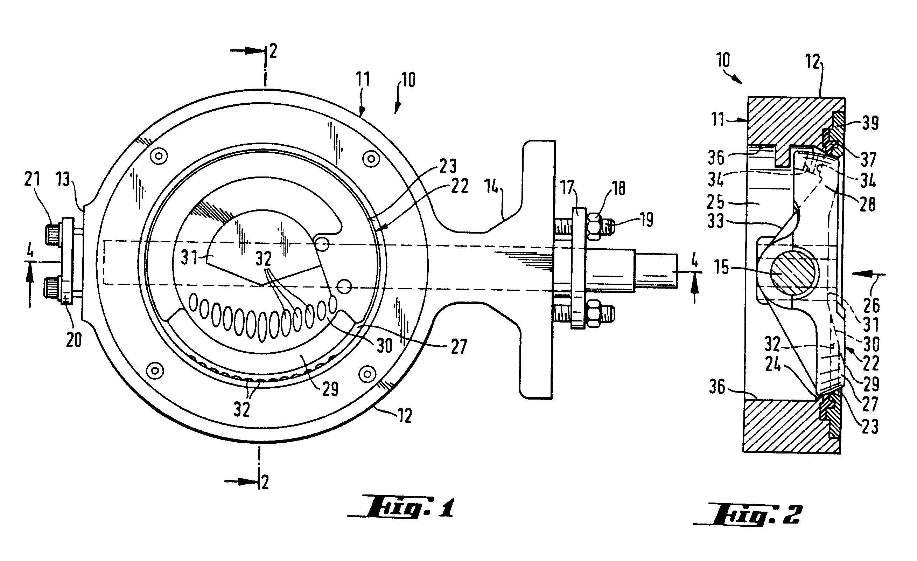

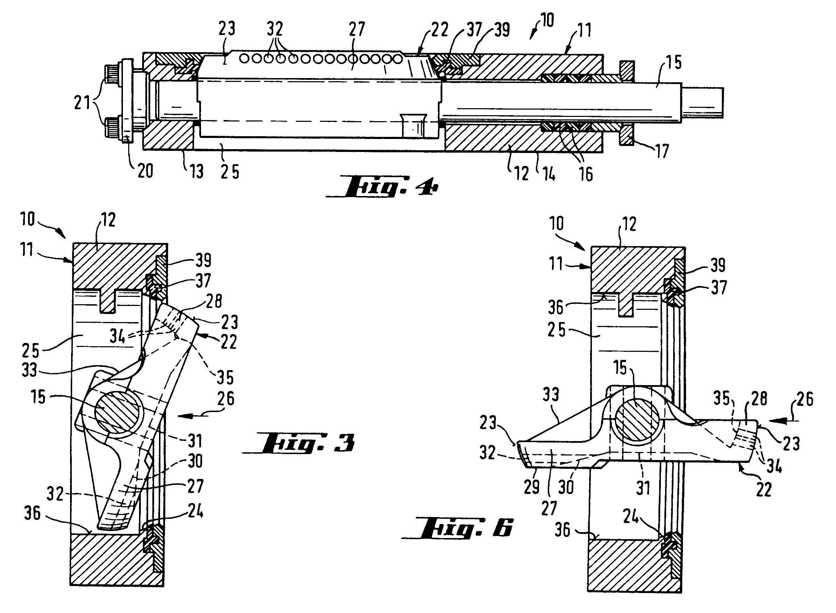

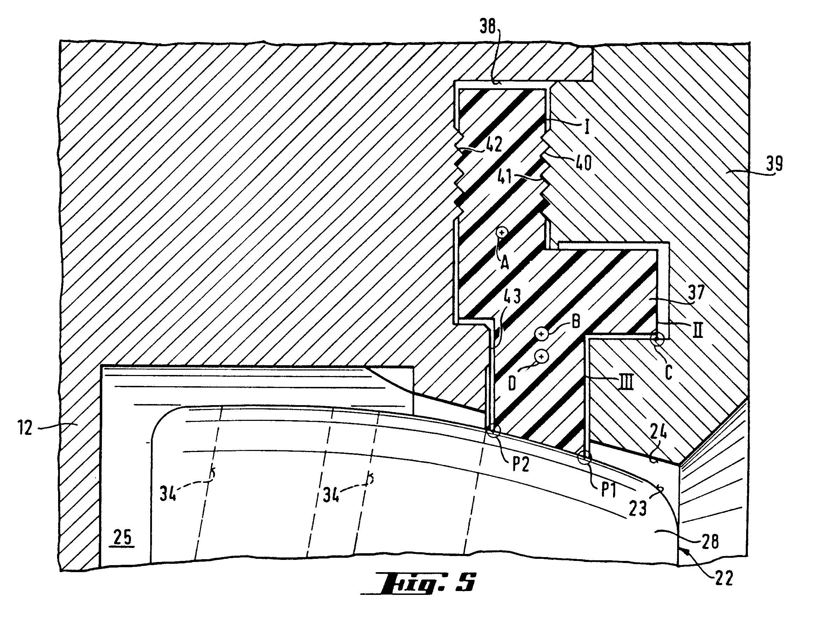

Referring to the drawings, and initially to Fig. 1, a butterfly valve is generally designed by the reference numeral 10. The valve includes a valve housing 11 which comprises a cylindrical valve body 12 and shaft support structures 13, 14 integral therewith to rotatably support a shaft 15. As illustrated in Fig. 4, the shaft 15 is supported at either end by the structures 13, 14 and is arranged to extend completely through the internal flow area 25 of the valve body 12. Moreover, the right end of the shaft 15 extends beyond the structure 14 for connection to an actuator whereby the shaft may be selectively controlled to rotate through a work stroke in either the clockwise or counterclockwise rotational directions, as is well known in the art (not specifically illustrated).

To advantage, a series of sealing rings 16 is mounted between the internal surfaces of the structure 14 and shaft 15 to prevent fluid leakage. The sealing rings 16 are secured and compressed within the structure 14 by an end cap 17 which is bolted to the structure 14 by nut 18 and bolt 19 arrangement. An additional end cap member 20 is bolted to the open end of the shaft support structure 13 by suitable bolts 21 to close and seal off the valve housing 11.

A novel circular vane structure 22 including a part spherical outer periphery 23 is fixedly secured upon the shaft 15 for rotation within the valve body 12. As illustrated in Fig. 2, the shaft 15 supports the vane 22 whereby the entire outer periphery 23 of the vane 22 is in a sealed relation with a portion of the inner cylindrical surface 24 of the valve body 12. In this position, the vane 22 completely obstructs the flow area 25 of the valve body 12 to close the valve 10. Pursuant to conventional butterfly valve operation, the actuator (not specifically illustrated) operates to rotate the shaft 15 whereby the periphery 23 of the vane 22 is displaced from the inner surface 24. The shaft 15 may rotate the vane up to a quarter turn or 90° of rotation.

At 90° of rotation, the diameter of the vane 22 perpendicular to the shaft 15 will extend generally parallel with the direction 26 of fluid flow (see Fig. 6). In this position, the valve 10 is in the full open position. However, It should be understood that although the valve 10 is now in the full open position, the vane 22 is still within the flow area 25 of the valve body 12 and, therefore, presents an obstruction to fluid flow. Such a vane obstruction is an inherent problem with respect to butterfly valve design and it is important to provide a vane configuration which minimizes the flow obstruction effects of the vane while accomplishing low angle rotation flow control.

Pursuant to the invention, the vane 22 is mounted upon the shaft 15 whereby the shaft 15 is offset in the downstream direction from the peripheral portions 23 of the vane 22 (as seen in Fig. 2). Moreover, the vane 22 is formed to include asymmetrical upstream and downstream extending semi-circular projections 27, 28 each extending over diametrically opposed, approximately 180° portions of the vane 22. The upstream extending projection 27 is generally streamline in configuration including a flat, smooth upstream, most top surface 29 (as seen in Fig. 2) that gradually tapers down 30 to the upstream face 31 of the vane 22. As indicated by Figs. 3 and 6, the upstream extending projection 27 is rotated in the downstream direction, through 90° to the full open vane position, whereby the face 31, tapered surface 30 and flat smooth surface 29 of the projection 27 provide a smooth, streamline and turbulence free obstruction to fluid flow.

In accordance with the low angle rotation flow control features of the vane 22, as will be described in greater detail below, the upstream extending projection is provided with a series of fluid flow passages 32. Each of the flow passages 32 is arranged to extend generally parallel to the direction of fluid flow (as illustrated in Fig. 6) and includes an opening on the tapered surface 30 of the upstream extending projection 27 and a peripheral opening on the part spherical vane periphery 23. Of course, at full open position, (Fig. 6) the then parallel to flow passages 32 act to reduce the obstructing volume of the vane 22 and further minimize the obstruction effect of the vane 22 by accomodating fluid flow from the upstream oriented tapered surface opening of each passage 32 to the downstream oriented peripheral opening of each passage 32.

On the downstream face 33 of the vane 22 (see Fig. 2), the downstream extending projection 28 is formed to a length of extension that is relatively greater than the length of extension of the upstream extending projection 27 whereby two circumferentially spaced rows of flow passages 34 are formed for low angle flow control. Each of the flow passages 34 includes an opening on the part spherical periphery 23 of the vane 22 and an opening on the opposite surface 35 of the projection 28. Referring once again to Fig. 6, when the vane is in the full open position, the projection 28 will have been rotated in the upstream direction whereby the fluid flow around the face 33 of the vane 22 will first encounter the peripheral end of the projection 28. The two rows of flow passages 34 will act to reduce the obstructing volume of the projection 28 by accommodating fluid flow therethrough. In addition, the flow passages 34 are arranged to extend at a slight, upward angle relative to the direction of fluid flow 26 whereby the flow through the passages at full open position is guided upwardly to minimize turbulence around the offset shaft 15. The face 33 of the vane 22 is also tapered from either side of the shaft 15 to provide a more streamline, turbulence free flow around the shaft 15. Moreover, the projection 28 is offset below the shaft 15 when the vane 22 is in the full open position (see Fig. 6) as an additional means to minimize turbulence and facilitate smooth fluid flow across the face 33 of the vane 22 when in the full open position.

Thus, the full open obstruction and turbulence effects of the vane 22 are reduced to the lowest practicable limit while providing peripheral flow passages 32, 34 for significant low angle rotation fluid control. Referring now to Fig. 3, as the shaft 15 is operated to rotate the vane 22 in the clockwise opening direction, the periphery 23 is moved relative to the portion 24 of the valve body 12. Prior to displacement of the periphery 23 from a sealed relation with the portion 24, the flow passages 32, 34 of the projections 27, 28 will be gradually exposed to fluid flow. The vane 22 is rotated approximately 5-6° before any of the flow passages 32, 34 are exposed to fluid flow. At approximately 5-6° of rotation, all of the passages 32 and the first row of passages 34 will begin to be exposed to fluid flow approximately simultaneously. The entire fluid flow will be through the passages 32 and first flow of passages 34 from approximately 5-6° of rotation, until approximately 11° of rotation. Moreover, the volume of fluid flow will gradually and controllably increase as the passages 32 and first row of passages 34 are gradually exposed to full fluid flow due to rotation of the vane 22. At approximately 11° of rotation, the periphery 23 about the projection 27 will just clear the portion 24 of the valve body 12 and the second row of passages 34 will begin to be exposed to fluid flow.

Thereafter, further rotation of the vane 22 will result in a further gradual and controlled increase in fluid flow due to the existing flow through the fully exposed passages 32 and first row of passages 34, the gradual exposure of the second row of passages 34 and the increasing flow around the displaced, downstream rotated periphery 23 about the projection 27. As discussed above, the periphery 23 adjacent the projection 27 is in close proximity (approximately 1,55mm(.061$^n$)) to the inner wall 36 of the valve housing 12. Moreover, the fluid flow through the passages 32 will exit the passages 32 at the peripheral openings thereof and flow toward the close inner wall 36. The close proximity between the wall 36 and periphery 23, together with the peripheral fluid egress from the passages 32 results in an inherent flow control whereby the inherent control about the projection 27 the gradual fluid flow increase due to the gradual exposure of the second row of flow passages 34 to fluid flow provides further low angle flow control from approximately 11° of rotation to approximately 17° of rotation of the vane 22.

At approximately 17° of rotation, the periphery 23 about the projection 28 will clear the surface 24 and further fluid flow increase up to 90° of rotation of the vane 22 will be due to increased flow around both the upstream rotated and downstream rotated portions of the periphery 23 of the vane 22. However, at approximately 17° of rotation and beyond, there is sufficient linearity between degrees of rotation and flow increase to accommodate critical flow requirements. As illustrated in the following graph, the combined effects of the flow passages 32, 34 and inherent flow control due to the close proximity between the periphery 23 about the projection 27 and inner wall 36 and peripheral fluid egress result in a highly linear relationship between fluid flow increase and degrees of rotation. The graph includes the results of an experimental test run on 15,24cm (6") class 150/300 valve prototype and plots degrees of rotation of the vane versus Cv.

Cv is a standard valve industry measure of flow volume and is calculated according to the following formula:

$$Cv = Q\sqrt{\frac{g}{\Delta P}}$$

wherein:

Q = [gpm (gallon per minute)] 73,4 cm³s⁻¹ = 7,34·10⁻⁵ m³s⁻¹

$\Delta P$ = P upstream-P downstream - (pressure drop through valve housing)

g = a constant (specific gravity, 1 for water at room T)

As clearly indicated in the test results depicts in the above graph, there is a considerable degree of linearity and therefore control over flow increase due to vane rotation at both the low angle, highly critical initial fluid flow phase of valve operation and high angle operation. Thereafter, as the vane 22 is rotated toward the full open 90° orientation, the streamline projection 27 and geometric offset relation between the projection 28 and shaft 15, as well as the fluid flow through the passages 32, 34 provide a vane configuration that affords maximum full flow with minimum turbulence.

Referring once again to Fig. 2, when the vane 22 is in the closed position, it it critical that a leak tight seal be maintained between the periphery 23 and wall portion 24. To assure the integrity of the seal, an annular seal element 37 built in accordance with the invention is mounted circumferentially about the portion 24 of the valve wall 36 at the position where the vane periphery 23 is closest to the portion 24 to form the actual seal. The seal element 37 is formed to a predetermined cross-section, as will be described in greater detail below, and is mounted between a recess 38 formed in the valve body 12 and an annular retaining element 39 which is secured to the valve body 12 by any well known suitable means such as threaded bolts (not shown). As clearly illustrated in the detailed drawing of Fig. 5, the retaining element 39 and recess 38 define a seal containment chamber which generally conforms to the predetermined cross-section of the seal element 37. The seal element itself may be described in terms of three integral portions I, II, III which are dimensioned relative to one another and to the chamber defined by the recess 38 and retaining element 39 to provide an effective seal against the vane periphery 23. At the same time, the predetermined cross-section of the seal element 37 will provide a leak-tight seal over a wide range of fluid pressures in a manner whereby the deleterious effects of the pressure are minimized thereby greatly increasing the work life of the seal.

Pursuant to the inventive concept embodied in the seal element 37, the fluid pressure will be retained by the seal element 37 through three clearly defined, discrete pressure range operating stages of the element 37. In the preferred embodiment, the seal element 37 comprises an EPT teflon material (without any ancillary spring members or glass filled internal membranes) with a surface 40 of the first portion I conforming to serrations 41, 42 formed in the retaining element 39 and recess 38, respectively whereby the element 37 is securly mounted within the containment chamber. The surface 40, and serrations 41, 42 also provide an effective seal against leakage to the outside of the valve body 12. The first portion I is integral with the second portion II which is arranged to extend, relative to the first and third portions, in the upstream fluid flow direction. The third portion III is integral with the lower end of the second portion II and extends downwardly into the flow area 25 for sealing contact with the periphery 23 of the vane 22. As should be understood, the lower end of the portion II is conformed to the part spherical contour of the periphery 23 to provide an effective seal between the element 37 and periphery 23 from point P1 to point P2. Moreover, the portion III extends into the flow area 25 by an amount sufficient to provide a radial squeeze on the periphery 23 to form a leak tight seal.

As described above, and as illustrated in Fig. 5, the mating surface 40, and serrations 41, 42 rigidly support the seal element 37 from point A outward to the sealing surface bewteen points P1 and P2. Point A is also initially a pivot point about which the sealing surface (P1 - P2) may pivot and freely, effectively contact the vane periphery 23. The stage one operating mode contemplates the seal orientation as depicted in Fig. 5 during a fluid pressure range $9,81 \cdot 10^4$ Pa (0 PSIG) to approximately $7,85 \cdot 10^5$ Pa (100 PSIG). The only contact points for the seal element 37 are at the mating surfaces 40, 41, 42 and with the vane periphery 23 between points P1 and P2. The seal element 37 is dimensioned such that the radial squeeze on the periphery 23 is sufficient to seal fluid under the low pressure conditions.

Stress and deflection on the seal 37 in the low pressure stage one operating mode may be approximated by applying the vertical deflection and unit stress at surface of plate formulas set forth on pages 173-174 of the Handbook of Formulas for Stress and Strain by William Griffel. (New York: Frederick Ungar Publishing Co., 1966, hereby expressly incorporated by reference). The constants used for the calculations according to the formulas as applied to the stage one mode of the seal element 37 are determined from loading case 6 of Table 1 (page 175) (circular plate with concentric hole - outer edge fixed and supported, uniform load over entire actual surface).

A prototype seal element according to the invention was constructed for use in connection with the 6 inch prototype valve discussed above. The prototype seal element was made from an EPT teflon material having a tensile strength of $27,6 \cdot 10^6$ Pa (4000 psi), a tensile modulus of elasticity equal to $10 \times 40^4$ and a tensile elongation equal to 400%. Moreover, the prototype seal element had a thickness of 3.96mm (0.156 inches) an inner diameter (to P1-P2) equal to 14,33 cm (5.643 inches) and an outer diameter (to fixed point A) equal to 16,23 cm (6.388 inches). By applying the Griffel formulas according to Table 1 case 6 it was determined that with the above seal values and dimensions operated under a pressure of $6,87 \cdot 10^5$ Pa (100 psi), the maximum vertical deflection of the prototype seal is 0.241mm (.00095") and the maximum stress at the outer edge of the seal is $1,31 \cdot 10^7$ Pa (1889 psi).

When the operating environment of the valve is changed to be within a pressure arrangement of between $78,67 \cdot 10^4$ Pa (100 psig) and $35,34 \cdot 10^5$ Pa (500 psig), the fluid pressure will push the seal element 37 into contact with the support surface 43 at point B. Accordingly, the seal element 37 will no longer be unsupported from point A to points P1 - P2, but will have some support from the support surface 43 applied at point B. The support introduced at point B will tend to inhibit increasing stresses at point A due to the higher fluid presure environment. When the seal element 37 is in contact with the support surface 43 (i.e., a pressure range of from $78,67 \cdot 10^4$ Pa (100 psig) to $35,34 \cdot 10^5$ Pa (500 psig)) it will be in the stage two operating made contemplated by the inventive concept.

A reasonable approximation of the true working stresses on the seal element 37 during second mode operation may be found by taking an average of the calculated stresses from each of case 6 and case 13 (both edges fixed, balanced loading (piston)) of Table 1. Such an approximation considers point B to be part way between rigidly fixed and freely supported. The case 6 and case 13 calculations for the prototype seal (all valves and dimensions for the seal being the same as in the stage one with exception of the outer diameter which is now considered to be 15,24cm (6 inches) (to point B) and formula constants according to case 6 and case 13 of Table 1)) operated at $35,34 \cdot 10^5$ Pa (500 psig) indicate a case 6 maximum deflection of 0,295mm (0.0116 inches) and a maximum stress at the outer edge of $64,69 \cdot 10^5$ Pa (942 psi) and a case 13 maximum deflection of 0,165mm (0.0065 inches) and maximum stres (at outer edge) $92,36 \cdot 10^5$ Pa (1345 psi).

Thus, the higher pressure environment of the stage two operating mode causes the seal element 37 to naturally assume a different geometric orientation relative to the seal containment chamber defined by the recess 38 and retaining element 39 by pivoting into contact with the support surface 43. The reorientation of the seal element 37 and the additional part rigidly fixed, part freely supported seal retention introduced at point B advantageously changes the stress effects upon the seal element 37 by reducing the outer diameter dimension, from point A to point B, and by changing the Griffel case approximations from case 6 to a average of case 6 and case 13. Accordingly, the maximum stress upon the outer edge of the seal member is retained at a level below the stresses that would be introduced upon the seal element 37 had the reorientation not occurred.

The third operating mode of the seal element 37 occurs when the operating environment includes fluid pressures above $35,34 \cdot 10^5$ Pa (500 psig). At such higher pressure operation, the fluid pressure causes the seal element 37 to deflect further until the upstream extending portion II of the seal element 37 contacts the retaining element 39 at point C. In this orientation, the seal element 37 may be considered as being rigidly held at points P1 and P2 and at point D (see Fig. 5). Accordingly, the seal element 37 will now have an effective outer edge diameter (to point D) that is considerably smaller than the outer edge diameter of the stage one operating mode (to point A) resulting in a reduced stress effect upon the seal caused by the higher pressure enviornment. Moreover, the rigid support at point D as well as the continued retention applied to the seal at point B provides a stress distribution upon the seal as a pure case 13 situation (Table 1 of Griffel Handbook). In the prototype seal discussed above, the seal element 37 in the third operating mode will have an outer diameter, (to point D) 15,05cm (5.925 inches)(as opposed to 16,23cm (6.388 inches) for stage one (to point A) and 15,24cm (6.0 inches) for stage two (to point B)) resulting in a case 13 maximum deflection of 0,152mm (0.006 inch) and maximum stress of $8,71 \cdot 10^6$ Pa (1268 psi) at $5,25 \cdot 10^6$ Pa (750 psig) pressure operation.

Thus, in accordance with the invention embodied in the seal element 37, the three discrete pressure range modes of operation inherently and automatically orient the seal relative to the seal confinement chamber to move the seal retention point (outer diameter) inward toward the sealing surface defined by points P1 and P2. This results in the formation of a leak tight seal around the outer perimeter of the vane while confining the fluid pressure and stress effects upon the seal to within practical minimum ranges. The relatively low stress throughout the various pressure ranges of seal operation minimize seal wear and cold flow to achieve a long, effective seal work life. Significantly, the seal element 37 is operable without the need of glass filled internal membranes for dimensional stability or additional spring elements to impart a radial squeeze on the vane.

**Claims**

1. Seal arrangement for a butterfly control valve, comprising
   - a valve housing (11),
   - a generally disc-shaped vane (22) selectively movable within said valve housing (11) to provide valve shutoff,
   - a unitary seal element (37) extending circumferentially within said valve housing (11) at the portion thereof in close proximity to said periphery of said vane (22) in the shutoff position thereof, to form a leak tight seal between said vane (22) and said valve housing (11),
   - a seal containment chamber (38, 39) arranged in said valve housing (11) to engage and support preselected portions (I, II, III) of said seal element (37) to thereby provide a seal element retention point,
- said seal containment chamber (38, 39) having a cross-section that generally conforms to and surrounds the cross-section of said seal element (37),
- said seal element (37) and said containment chamber (38, 39) having predetermined opposing cooperating surfaces,
- said seal element (37) being exposed to and pivotable by a pressure of fluid in said valve housing (11) to be variably oriented relative to said seal containment chamber (38, 39) as a function of varying pressures of the fluid,
- said opposing, cooperating surfaces of the seal element (37) and the seal containment chamber (38, 39) being in varying predetermined contacting relationships varying with incrementally increasing pressures to provide increasing support for said seal element (37) and to incrementally displace said seal element retention point inwardly toward the sealing surface of said seal element (37) for successive higher predetermined pressures to thereby provide a practicable minimal stress distribution and seal deflection on said seal element,
- said seal element (37) having a lowermost portion (III) arranged to form said leak tight seal,
- said lowermost portion (III) being integral with a midportion (II) of the seal element (37), said mid-portion (II) being arranged to extend in the upstream direction,
- said mid-portion (II) being integral with a topmost portion (I) of the seal element (37),
- said containment chamber (38, 39) physically engaging said topmost portion (I) of the seal element (37) to support said seal element (37), and
- said seal element (37) being flexible and generally pivotable about the topmost portion (I) thereof,
characterized in that
said seal element (37) is oriented relative to said containment chamber (38, 39) during three predetermined unidirectional pressure ranges, whereby

(a) during said first pressure range said topmost portion (I) only and said containment chamber (38, 39) at the support engagement of the seal element (37) are in contact,
(b) during said second pressure range the contact of (a) above continues and a preselected point on the seal element (37) at a portion radially inward from said support engagement of said seal element (37) and on the downstream side of said seal element (37) contacts a surface of the containment chamber (38, 39) that extends perpendicular to the direction of fluid flow (26) through the valve housing (11) to provide a partly rigidly fixed, partly freely supported contact with said containment chamber (38, 39) at a point located radially inward from the support engagement of said seal element (37), and
(c) during said third pressure range the contacts of (a) and (b) above continue and a preselected point on said midportion (II) of said seal element (37) contacts a surface of said containment chamber (38, 39) that extends parallel to fluid flow (26) through the valve housing (11) to form a further rigid support (43) for said seal element (37) that is spaced radially inward from both the support engagement of said seal element (37) and the support contact of said seal element (37).

2. Seal arrangement according to claim 1, characterized in that said seal element (37) comprises EPT teflon material.

3. Seal arrangement according to claim 1 or 2, characterized in that said containment chamber (38, 39) is formed to include serrations (41, 42) arranged to mate with said topmost portion (I) of said seal element (37) to thereby engage and support said seal element (37).

**Revendications**

1. Joint d'étanchéité pour soupape à papillon comprenant
- un boîtier de soupape,
- un diaphragme (22) sous forme de disque déplaçable à volonté dans ledit boîtier de soupape (11) afin d'en assurer la fermeture,
- un joint d'étanchéité uniforme (37) s'étendant sur la circonférence intérieure du boîtier de soupape (11) à une partie de celui-ci immédiatement adjacente à la périphérie du diaphragme (22) dans la position de fermeture de ce dernier, afin d'assurer une liaison étanche entre le diaphragme (22) et le boitier de soupape (11),
- une chambre de réception du joint (38, 39), disposée dans ledit boîtier de soupape (11) de manière à saisir et à supporter des parties prédéterminées (I, II, III) dudit élément de joint (37)

8

EP 0 218 788 B1

afin de former ainsi un point de retenue de l'élément de joint,
- ladite chambre de réception de joint (38, 39) ayant une section telle qu'elle est généralement conforme à et enveloppe la section de l'élément de joint (37),
- ledit élément de joint (37) et ladite chambre de réception du joint (328, 39) présentant des surfaces opposées coopérantes et prédéterminées,
- ledit élément de joint (37) étant exposé à et pivotable par une pression de fluide existant dans ledit boitier de soupape (11) afin d'être variablement orientable par rapport à ladite chambre de réception du joint (38, 39) en fonction des pressions variables du fluide,
- lesdites surfaces opposées et coopérantes de l'élément de joint (37) et la chambre de réception du joint (38, 39) se trouvant en relation de contact variable changeant avec la pression progressivement augmentante afin d'assurer un support toujours croissant pour ledit élément de joint (37) et de déplacer progressivement ledit point de rétention de l'élément de joint en direction intérieure vers la surface d'étanchéité dudit élément de joint (37) pour obtenir des pressions prédéterminées successivement plus élevées, afin d'assurer ainsi une distribution de contraintes et une déflection de l'élément de joint pratiquement minimales,
- ledit élément de joint (37) comportant une partie inférieure (III) formant la liaison imperméable,
- ladite partie inférieure (III) formant partie intégrante d'une partie centrale (II) de l'élément de joint (37), ladite partie centrale étant disposée telle qu'elle s'étend en direction amont,
- ladite partie centrale (II) formant partie intégrante d'une partie supérieure (I) de l'élément de joint (37),
- ladite chambre de réception du joint (38, 39) saisissant physiquement la partie supérieure (I) de l'élément de joint (37) afin de supporter ledit élément de joint (37), et
- ledit élément de joint (37) étant élastique et généralement pivotable autour de sa partie supérieure (I),

**caractérisé en ce que**

ledit élément de joint (37) est orienté relativement à la chambre de réception du joint (38, 39) dans trois plages de pressions unidirectionnelles prédéterminées, garantissant ainsi que
(a) dans ladite première plage de pression uniquement la partie supérieure (I) et la chambre de réception du joint (38, 39) sont en contact avec l'élément de support dudit élément de joint (37),
(b) que dans ladite deuxième plage de pression le contact de (a) ci-dessus est maintenu, et un point prédéterminé localisé sur l'élément de joint (37) contacte à une partie disposée radialement vers l'intérieur du support dudit élément de joint (37) et en aval dudit élément de joint (37), une surface de la chambre de réception du joint (38, 39), s'étendant perpendiculairement par rapport à la direction d'écoulement du fluide (26) à travers le boîtier de soupape (11), afin d'assurer un contact partiellement rigide et partiellement libre avec ladite chambre de réception (38, 39) à un point disposé en direction radiale vers l'intérieur du support d'emprise dudit élément de joint (37), et
(c) dans la troisième plage de pression le contact entre (a) et (b) ci-dessus est maintenu et un point prédéterminé sur la partie centrale (II) dudit élément de joint (37) contacte une surface de ladite chambre de réception du joint (38, 39) s'étendant parallèlement par rapport à l'écoulement du fluide (26) à travers le boitier de soupape (11), afin de former un autre support rigide (43) pour ledit élément de joint (37) espacé radialement vers l'intérieur aussi bien du support dudit élément de joint (37) que du contact de support dudit élément de joint (37).

2. Joint d'étanchéité suivant la revendication 1,
**caractérisé en ce que**
ledit élément de joint (37) est composé d'un matériau comprenant du téflon du type EPT.

3. Joint d'étanchéité suivant l'une des revendications 1 ou 2,
**caractérisé en ce que**
la chambre de réception (38, 39) comprend des rétreints (41, 42) disposés de manière à engrener la partie supérieure (I) dudit élément de joint (37) afin de saisir et de supporter ainsi ledit élément de joint (37).

**Patentansprüche**

1. Dichtung für ein Hochleistungsklappenventil, die folgendes aufweist:
- ein Ventilgehäuse (11),

9

- eine weitgehend scheibenförmige Blende (22), die in dem Ventilgehäuse wahlweise beweglich ist, um das Ventil zu schließen,
- ein einheitliches Dichtelement (37), das sich in Umfangsrichtung in dem Ventilgehäuse (11) an einem Teil erstreckt, der dicht an der Peripherie der Blende (22) in deren Schließstellung angeordnet ist, um eine lecksichere Abdichtung zwischen der Blende (22) und dem Ventilgehäuse (11) zu gewährleisten,
- eine Dichtungskammer (38, 39), die in dem Ventilgehäuse (11) so angeordnet ist, daß sie in ausgewählte Teile (I, II, II) des Dichtelementes eingreifen und sie abstützen kann, um so einen Rückhaltepunkt für das Dichtelement zu bilden,
- wobei diese Dichtungskammer (38, 39) einen Querschnitt hat, der weitgehend mit dem Querschnitt des Dichtelementes (37) übereinstimmt und ihn umfaßt,
- und das Dichtelement (37) und die Dichtungskammer (38, 39) vorbestimmte gegenüberliegende zusammenwirkende Flächen aufweisen,
- und das Dichtelement (37) mit einem Fluid in Berührung steht und mittels einem in dem Ventilgehäuse (11) herrschenden Fluiddruck geschwenkt werden kann, um relativ zu der Dichtungskammer (38, 39) in Abhängigkeit von variablen Fluiddrücken unterschiedlich ausgerichtet zu werden,
- wobei sich die gegenüberliegenden zusammenwirkenden Flächen des Dichtelementes (37) und der Dichtungskammer (38, 39) in einem variablen vorbestimmten Berührungsverhältnis befinden, das mit den sich verändernden stufenweise ansteigenden Drücken variiert, um eine ansteigende Abstützung für das Dichtelement (37) zu gewährleisten und den Rückhaltepunkt des Dichtelementes stufenweise nach innen in die Richtung der Dichtfläche des Dichtelementes (37) zu verschieben, um so sukzessive höhere vorbestimmte Drücke zu erzeugen und eine praktisch minimale Kraftverteilung und Durchbiegung an dem Dichtelement zu gewährleisten,
- und das Dichtelement (37) einen unteren Teil (III) aufweist, der so angeordnet ist, daß er die lecksichere Abdichtung bildet,
- wobei dieser untere Teil (III) einen integralen Teil mit dem Mittelteil (II) des Dichtelementes (37) bildet und dieser Mittelteil (II) so angeordnet ist, daß er sich flußaufwärts erstreckt,
- und dieser Mittelteil (II) einen integralen Teil mit einem oberen Teil (I) des Dichtelementes (37) bildet,
- und die Dichtungskammer (38, 39) physisch in den oberen Teil (I) des Dichtelementes (37) eingreift um dieses Dichtelement (37) abzustützen, und
- das Dichtelement (37) elastisch und weitgehend um seinen oberen Teil (I) schwenkbar gelagert ist,

**dadurch gekennzeichnet, daß**

2. Dichtung nach Anspruch 1,
**dadurch gekennzeichnet, daß**
das Dichtelement (37) aus einem Werkstoff besteht, der EPT-Teflon enthält.

3. Dichtung nach einem der Ansprüche 1 oder 2,
**dadurch gekennzeichnet, daß**
die Dichtungskammer (38, 39) so ausgebildet ist, daß sie Riffelungen (41, 42) aufweist, die so geformt sind, daß sie mit dem obersten Teil (I) des Dichtelementes (37) in Eingriff stehen, um dieses Dichtelement (37) zu halten und abzustützen.

Fig. 1

Fig. 2

EP 0 218 788 B1

*Fig: 4.*

*Fig: 3*

*Fig: 6*

EP 0 218 788 B1

Fig. 5